(19) Europäisches Patentamt

European Patent Office

Office européen des brevets

(11) EP 0 618 174 B1

(12) EUROPÄISCHE PATENTSCHRIFT

(45) Veröffentlichungstag und Bekanntmachung des Hinweises auf die Patenterteilung:
06.11.1996 Patentblatt 1996/45

(51) Int. Cl.$^6$: **C01G 49/06**, C09C 1/24

(21) Anmeldenummer: 94104663.3

(22) Anmeldetag: 24.03.1994

(54) **Verfahren zur Herstellung von transparenten Eisen-oxid-Gelbpigmenten**

Process for the preparation of transparent yellow iron oxide pigments

Procédé de préparation de pigments jaunes d'oxyde de fer transparents

(84) Benannte Vertragsstaaten:
BE CH DE ES FR GB IT LI NL

(30) Priorität: 02.04.1993 DE 4310864

(43) Veröffentlichungstag der Anmeldung:
05.10.1994 Patentblatt 1994/40

(73) Patentinhaber: BASF Aktiengesellschaft
67063 Ludwigshafen (DE)

(72) Erfinder:
• Klingelhoefer, Paul, Dr.
D-68161 Mannheim (DE)
• Schwidetzky, Christoph, Dr.
D-97241 Bergtheim (DE)
• Wienand, Henning, Dr.
D-68809 Neulussheim (DE)
• Mronga, Norbert, Dr.
D-69221 Dossenheim (DE)
• Schwab, Ekkehard, Dr.
D-67434 Neustadt (DE)
• Nebel, Michael
D-51109 Koeln (DE)

(56) Entgegenhaltungen:
FR-A- 2 517 292        GB-A- 2 034 295

• PATENT ABSTRACTS OF JAPAN vol. 15, no. 341
(C-0863)29. August 1991 & JP-A-03 131 525
(ISHIHARA SANGYO KAISHA)

**Beschreibung**

Die vorliegende Erfindung betrifft ein neues Verfahren zur Herstellung von transparenten Eisenoxid-Gelbpigmenten durch Fällen von Eisen(II)hydroxid durch Zugabe einer anorganischen Base zu einer Eisen(II)salzlösung und anschließende Oxidation zu FeOOH.

Weiterhin betrifft die Erfindung neue transparente Eisenoxid-Gelbpigmente auf Basis von dotiertem FeOOH, das als Dotierungsmittel

A) 0,05 bis 2 Gew.-% Phosphor in Form von Phosphat und
B) 0,1 bis 3 Gew.-% Zink

enthält, und ihre Verwendung zum Färben von polymerem Material.

Eisenoxidpigmente gewinnen wegen ihrer chemischen Stabilität, ihrer Ungiftigkeit und ihrem weiten Farbspektrum von gelb über orange, rot und braun zu schwarz zunehmend an Bedeutung.

Von besonderem Interesse sind dabei auch die transparenten Eisenoxidpigmente, z.B. das transparente Gelbpigment Goethit ($\alpha$-FeOOH).

Um einen transparenten Farbeindruck aufzuweisen, muß ein Pigment eine bestimmte partikelgröße und Partikelmorphologie aufweisen, weshalb gezielte Herstellverfahren erforderlich sind. So werden transparente Eisenoxid-Gelbpigmente üblicherweise nach einstufigen Verfahren hergestellt, indem Eisen(II)hydroxid zunächst durch Zugabe einer Base aus Eisen(II)salzlösungen ausgefällt wird und dann zu FeOOH oxidiert wird. Um die gewünschte Partikelmorphologie zu erreichen, sind bei den bekannten Verfahren durchweg niedrige Konzentrationen der umgesetzten Lösungen und niedrige Reaktionstemperaturen erforderlich. In Ullmann's Encyclopedia of Industrial Chemistry (Fifth Edition, Vol. A 20 (1992), p. 358) findet sich beispielsweise die Angabe, daß besonders gute Ergebnisse bei der Verwendung von 6 gew.-%igen Eisen(II)sulfatlösungen und bei Temperaturen unter 25°C erzielt werden. Höher konzentrierte Eisen(II)salzlösungen führen zudem meist zu nicht rührbaren Reaktionsgemischen.

Es sind auch Herstellungsverfahren bekannt, bei denen das Kristallwachstum regulierende Substanzen eingesetzt werden (US-A-2 558 302 und DE-A-12 19 612), jedoch wird auch hier einstufig nur bei Temperaturen unter 40°C und niedrigen Konzentrationen gearbeitet.

Unter den beschriebenen Bedingungen können zwar coloristisch gute Produkte erhalten werden, jedoch läßt die Wirtschaftlichkeit der herkömmlichen Verfahren aufgrund der niedrigen Raum-Zeit-Ausbeuten zu wünschen übrig.

Der Erfindung lag daher die Aufgabe zugrunde, coloristisch wertvolle transparente Eisenoxid-Gelbpigmente auf wirtschaftliche Weise zugänglich zu machen.

Demgemäß wurde ein Verfahren zur Herstellung von transparenten Eisenoxid-Gelbpigmenten durch Fällen von Eisen(II)hydroxid durch Zugabe einer anorganischen Base zu einer Eisen(II)salzlösung und anschließende Oxidation zu FeOOH gefunden, welches dadurch gekennzeichnet ist, daß man

a) eine mindestens 0,5 molare, wäßrige Eisen(II)salzlösung bei 25 bis 45°C in Gegenwart von gelösten Phosphaten und gewünschtenfalls Zinksalzen zunächst mit so viel Base versetzt, daß 50 bis 70 % der eingesetzten Eisen(II)ionen als Hydroxid ausgefällt werden, dann so lange oxidierendes Gas durch die erhaltene Mischung leitet, bis der pH-Wert auf einen Wert < 4,5 abgesunken ist, und
b) anschließend die Temperatur der Mischung auf 50 bis 80°C erhöht und durch weitere Zugabe von Base unter Einhaltung eines pH-Wertes von 4 bis 6 und gleichzeitiger Zuführung von oxidierendem Gas die Fällung des Eisens als FeOOH vervollständigt und das ausgefällte Pigment anschließend in üblicher Weise aus der wäßrigen Suspension isoliert.

Weiterhin wurden transparente Eisenoxid-Gelbpigmente auf Basis von dotiertem FeOOH gefunden, das als Dotierungsmittel

A) 0,05 bis 2 Gew.-% Phosphor in Form von Phosphat und
B) 0,1 bis 3 Gew.-% Zink

enthält.

Außerdem wurde die Verwendung dieser Pigmente zum Färben von polymerem Material gefunden.

Das erfindungsgemäße Herstellungsverfahren ist ein zweistufiges Verfahren mit gezielter Temperaturführung.

In der ersten Stufe wird bei niedriger Temperatur zunächst nur ein Teil der vorgelegten Eisen(II)ionen durch Zusatz von Base in Gegenwart von Phosphat- und gewünschtenfalls Zinkionen als Eisen(II)hydroxid gefällt und anschließend mit oxidierendem Gas zu Keimen von $\alpha$-FeOOH oxidiert.

In der zweiten Stufe erfolgt das Wachstum der in der ersten Stufe gebildeten FeOOH-Keimkristalle, indem bei höherer Temperatur die restliche Eisen(II)menge bei konstantem PH-Wert im schwach sauren Bereich unter kontinuierlicher Zuführung von Base und gleichzeitigem Einblasen von oxidierendem Gas in den Reaktionsbehälter als FeOOH auf die Keime aufgefällt wird.

Im Unterschied zu den bekannten Herstellungsverfahren für transparente Eisenoxid-Gelbpigmente kann beim erfindungsgemäßen Verfahren bei deutlich höheren Eisen(II)salzkonzentrationen gearbeitet werden, ohne Probleme mit der Rührbarkeit des Reaktionsansatzes zu bekommen. In der Regel werden 0,5 bis 1,5 molare, vorzugsweise 0,7 bis 0,8 molare, Eisen(II)salzlösungen eingesetzt. Selbstverständlich könnte man auch niedrigere Konzentrationen wählen, das ginge jedoch zu Lasten der Wirtschaftlichkeit der Herstellung.

Geeignete Eisen(II)salze sind solche, die in Wasser löslich sind; bevorzugt sind Eisen(II)chlorid und vor allem Eisen(II)sulfat.

Als Dotierungsmittel werden Phosphate und bevorzugt zusätzlich auch Zinksalze eingesetzt, man kann jedoch auch nur Phosphate einsetzen. Dabei sind ebenfalls die in Wasser löslichen Verbindungen geeignet.

Als bevorzugte Phosphate seien beispielsweise Orthophosphate wie Natriumdihydrogenphosphat und Phosphorsäure, bevorzugt Pyrophosphate wie Natriumpyrophosphat und Pyrophosphorsäure genannt.

Als Zinksalz eignet sich neben anderen löslichen Salzen vor allem Zinksulfat.

Die eingesetzten Phosphate und Zinksalze wirken wachstumsregulierend, d.h. sie steuern Partikelgröße und Partikelform der entstehenden Keimkristalle. Die Menge dieser wachstumsregulierenden Substanzen ist auf die Temperatur im ersten Verfahrensschritt abzustimmen.

Im allgemeinen werden 0,05 bis 2, vorzugsweise 0,5 bis 1,5 Gew.-% Phosphor, bezogen auf FeOOH, als Phosphat eingesetzt.

Bei der bevorzugten Verfahrensvariante werden zusätzlich auch Zinksalze eingesetzt und zwar in Mengen von in der Regel 0,1 bis 3, bevorzugt 0,75 bis 1,25 Gew.-% Zink, bezogen auf FeOOH.

Die Temperatur beträgt in dieser ersten Stufe in der Regel 25 bis 45°C, vorzugsweise 30 bis 40°C.

Als anorganische Basen sind insbesondere Alkalihydroxide und -carbonate wie Natrium- und Kaliumhydroxid und Natrium- und Kaliumcarbonat geeignet, die vorzugsweise in wäßriger Lösung zugesetzt werden.

Bei dem oxidierenden Gas handelt es sich bevorzugt um Luft, es können aber auch andere sauerstoffhaltige Gasmischungen, z.B. mit Stickstoff, verwendet werden. Die eingeleitete Luftmenge richtet sich nach der Größe des verwendeten Behälters und beträgt z.B. bei einem 10 l-Reaktor im allgemeinen 500 bis 1 000 l pro h.

Im ersten Verfahrensschritt geht man zweckmäßigerweise wie folgt vor:

Die Eisen(II)salze und Wachstumsregulatoren enthaltende wäßrige Lösung wird unter Inertgas, insbesondere Stickstoff, auf die gewünschte Temperatur erwärmt, dann wird so viel Base zugegeben, daß etwa 50 bis 70 % des eingesetzten Eisens als Eisen(II)hydroxid ausgefällt werden, und anschließend wird so lange Luft durch die Reaktionsmischung geleitet, bis der pH-Wert auf einen Wert von in der Regel < 4,5, bevorzugt < 4,2, besonders bevorzugt < 4,0 abgesunken ist. Die Oxidationsreaktion, die üblicherweise 1 bis 5 h dauert, ist dann abgeschlossen.

Die Temperatur beträgt in der folgenden zweiten Verfahrensstufe, in der die Fällung des Eisens vervollständigt wird, im allgemeinen 50 bis 80°C, vorzugsweise 65 bis 80°C.

Üblicherweise führt man den zweiten Verfahrensschritt so durch, daß man nach Temperaturerhöhung kontinuierlich Base zuführt, um einen pH-Wert von in der Regel 4 bis 6, bevorzugt 5 bis 5,5, einzuhalten, und gleichzeitig Luft in die Reaktionsmischung einleitet. Nach einer Zeit von im allgemeinen 1 bis 4 h ist die Fällung des Eisens als FeOOH vervollständigt.

Das Produkt kann anschließend in üblicher Weise durch Abfiltrieren, Waschen und Trocknen isoliert werden.

Für bestimmte Anwendungszwecke, beispielsweise für die Herstellung von Wasserbasislacken, empfiehlt es sich, die hergestellten Pigmente zusätzlich mit Phosphat zu belegen. Diese Belegung kann vorteilhaft direkt in der anfallenden wäßrigen Suspension, aber auch nach Isolierung und Redispergierung in wäßriger Phase vorgenommen werden. Die Temperatur für diesen Belegungsschritt ist nicht kritisch, man kann beispielsweise direkt in der erhitzten Reaktionsmischung arbeiten, oder man kann vorher auf Temperaturen bis Raumtemperatur abkühlen.

Hierfür sind beispielsweise die oben aufgeführten Phosphate, sowohl die Ortho- als auch die Pyrophosphate, geeignet, die üblicherweise in Mengen von etwa 0,1 bis 1, bevorzugt 0,3 bis 0,5 Gew.-% Phosphor, bezogen auf das nicht belegte Pigment, eingesetzt werden.

Diese Behandlung dauert im allgemeinen höchstens 2 h, vorzugsweise 0,5 bis 1 h.

Mit Hilfe des erfindungsgemäßen Verfahrens erhält man ein einheitliches Pigmentpräparat, das gute Anwendungseigenschaften aufweist. Zudem zeichnet sich das Verfahren durch hohe Raum/Zeit-Ausbeuten von etwa 15 bis 35 g FeOOH/l · h und damit seine Wirtschaftlichkeit aus.

Die erfindungsgemäßen neuen transparenten Eisen-Gelbpigmente sind aus dotiertem FeOOH aufgebaut. FeOOH liegt dabei nahezu vollständig als $\alpha$-FeOOH vor, andere Modifikationen wie $\gamma$-FeOOH oder $\alpha$-$Fe_2O_3$ sind in der Regel höchstens in Spuren vorhanden.

Als Dotierungsmittel sind im allgemeinen 0,05 bis 2, vorzugsweise 0,5 bis 1,5 Gew.-%, Phosphor in Form von Phosphat sowie in der Regel 0,1 bis 3, bevorzugt 0,75 bis 1,25 Gew.-% Zink enthalten. Der enthaltene Phosphor kann dabei sowohl als Orthophosphat $PO_4^{3-}$ als auch als Pyrophosphat $P_2O_7^{4-}$ vorliegen.

Die erfindungsgemäßen Pigmente weisen nadelförmige Gestalt der Partikel auf, sind extrem feinteilig, was sich durch eine spezifische Oberfläche von in der Regel $\geqq$ 80 m$^2$/g (gemessen nach DIN 55 132 mit einem Areameter der Fa. Ströhlein, Düsseldorf nach dem Einpunkt-Differenz-Verfahren nach Haul und Dümbgen) äußert, und zeichnen sich durch hohe Transparenz aus, die einer Helligkeitsdifferenz DL* von im allgemeinen > 45 entspricht, gemessen im Lack nach der Beziehung $DL^* = L^*_{25}{}^\circ - L^*_{70}{}^\circ$, wobei L* die Helligkeit im CIELAB-System bedeutet.

Die erfindungsgemäßen Eisenoxid-Gelbpigmente können vorteilhaft zur Einfärbung von Lacken, insbesondere auch hochwertigen Metalliclacken und Wasserbasislacken, und zur Einfärbung von Kunststoffen sowie zur Herstellung von Holzlasuren verwendet werden.

Beispiele

A) Herstellung von erfindungsgemäßen Eisenoxid-Gelbpigmenten

Beispiele 1 bis 7

a) In einem 10 l-Rührgefäß mit Rührer, Temperatur- und pH-Regelung und Gaseinleitungsvorrichtung für Stickstoff und Luft wurden zu 6 l einer 10 gew.-%igen wäßrigen Eisen(II)sulfatlösung (4,4 mol FeSO$_4$ · 7 H$_2$O) Lösungen von x g Phosphat und y g Zinksulfatheptahydrat, jeweils gelöst in 50 ml Wasser (Beispiele 1 bis 4) bzw. in 100 ml Wasser (Beispiele 5 bis 8), zugegeben. Die erhaltene Lösung wurde unter Einleiten von Stickstoff auf T$_a$°C temperiert.

Dann wurden 5,28 mol Natriumhydroxid als 15 gew.-%ige wäßrige Lösung zugegeben, um a % der vorgelegten Eisen(II)menge als Eisen(II)hydroxid zu fällen.

Anschließend wurde t$_a$ min unter Rühren ein Luftstrom von I$_a$ l/h in die Suspension eingeblasen, bis der pH-Wert unter 4,0 (Beispiele 1 bis 4) bzw. unter 3,8 (Beispiele 5 bis 8) abgesunken ist.

b) Nach Erhitzen der Reaktionsmischung auf T$_b$°C wurde die restliche Eisen(II)menge bei einem pH-Wert von 5,2, der durch kontinuierliches Zupumpen von 15 gew.-%iger Natronlauge konstant gehalten wurde, unter gleichzeitigem Einleiten von I$_b$ l/h Luft in t$_b$ min als FeOOH gefällt.

Das Pigment wurde abfiltriert, gewaschen und bei 80°C getrocknet.

Weitere Einzelheiten zu diesen Versuchen sowie deren Ergebnisse sind in den Tabellen 1a und 1b zusammengestellt.

Tabelle 1a: Reaktionsbedingungen bei der Herstellung

| Bsp. | x g | Phosphat | y g ZnSO$_4$·7 H$_2$O | T$_a$ [°C] | Anteil a des in a) ausgefällten Eisens [%] | Luftstrom l$_a$ [l/h] | Zeit t$_a$ [min] | T$_b$ [°C] | Luftstrom l$_b$ [l/h] | Zeit t$_b$ [min] | Raum/Zeit-Ausbeute [g FeOOH/l·h] |
|---|---|---|---|---|---|---|---|---|---|---|---|
| 1 | 11,6 | H$_4$P$_2$O$_7$ (95 %ig) | 6,88 | 35 | 60 | 1000 | 75 | 70 | 1000 | 40 | 25,5 |
| 2 | 11,6 | H$_4$P$_2$O$_7$ (95 %ig) | 6,88 | 45 | 60 | 1000 | 55 | 70 | 1000 | 35 | 33,0 |
| 3 | 7,55 | H$_4$P$_2$O$_7$ (95 %ig) | 6,88 | 30 | 60 | 1000 | 102 | 70 | 1000 | 37 | 21,0 |
| 4 | 11,8 | Na$_4$P$_2$O$_7$ · 10 H$_2$O* | 11,96 | 35 | 60 | 2000 | 96 | 70 | 2000 | 59 | 18,9 |
| 5 | 11,8 | Na$_4$P$_2$O$_7$ · 10 H$_2$O | 11,96 | 35 | 60 | 2500 | 80 | 80 | 1300 | 117 | 14,9 |
| 6 | 17,6 | Na$_4$P$_2$O$_7$ · 10 H$_2$O | 4,40 | 35 | 60 | 2000 | 86 | 70 | 2000 | 46 | 22,2 |
| 7 | 11,8 | Na$_4$P$_2$O$_7$ · 10 H$_2$O | 11,96 | 35 | 60 | 2000 | 50 | 70 | 2000 | 46 | 30,6 |

* Die Pyrophosphatlösung wurde mit Schwefelsäure auf pH = 1,3 eingestellt.

EP 0 618 174 B1

Beispiel 8

a) In einem 1 m$^3$-Rührbehälter wurden zu 600 l einer 10 gew.-%igen wäßrigen Eisen(II)sulfatlösung (127,5 kg FeSO$_4 \cdot$ 7 H$_2$O) Lösungen von 3,06 kg Tetranatriumpyrophosphatdecahydrat und 703 g Zinksulfatheptahydrat, jeweils gelöst in Wasser, zugegeben. Nach Erhitzen auf 40°C unter Stickstoff wurden 65 % der vorgelegten Eisen(II)menge durch Zugabe von 15 gew.-%iger Natronlauge als Hydroxid gefällt. Diese Fällung wurde unter Rühren und Einblasen von 30 m$^3$/h Luft in 60 min zu FeOOH-Keimen oxidiert.

b) Nach Erhitzen der Reaktionsmischung auf 70°C wurde die restliche Eisen(II)menge bei einem pH-Wert von 5,2, der durch kontinuierliches Zupumpen von 15 gew.-%iger Natronlauge konstant gehalten wurde, unter gleichzeitigem Einleiten von 30 m$^3$/h Luft in 30 min als FeOOH gefällt.
Das Produkt wurde über eine Filterpresse filtriert, gewaschen und bei 80°C getrocknet.
Die Raum/Zeit-Ausbeute betrug 34 g FeOOH/l $\cdot$ h. Weitere Angaben zu dem erhaltenen Pigment sind Tabelle 1b zu entnehmen.

Beispiel 9

1 kg des in Beispiel 8 hergestellten Pigments wurde in 16 l Wasser redispergiert. Die erhaltene Dispersion wurde auf 70°C erwärmt. Nach Zugabe von 13,1 g Natriumdihydrogenphosphatdihydrat noch 30 min bei dieser Temperatur gerührt.
Das Produkt wurde abfiltriert, gewaschen und bei 80°C getrocknet. Weitere Angaben zu dem erhaltenen Pigment sind in Tabelle 1b aufgeführt.

Tabelle 1b

| Charakterisierung der erhaltenen Pigmente | | | | |
|---|---|---|---|---|
| Bsp. | spezifische Ober-fläche [m$^2$/g]* | Stampfgewicht [g/cm$^3$] | Gehalt [Gew.-%] | |
| | | | Phosphor | Zink |
| 1 | 116,3 | 1,08 | 1,01 | 0,36 |
| 2 | 95,5 | 0,90 | 1,01 | 0,36 |
| 3 | 93,6 | 1,01 | 0,62 | 0,36 |
| 4 | 86,7 | 0,74 | 0,45 | 0,75 |
| 5 | 89,8 | 0,70 | 0,45 | 0,75 |
| 6 | 85,5 | 0,89 | 0,65 | 0,25 |
| 7 | 90,6 | 0,81 | 0,45 | 0,75 |
| 8 | 97,8 | 0,79 | 1,07 | 0,42 |
| 9 | 92,5 | | 1,34 | 0,42 |

* gemessen nach DIN 66123 mit einem Areameter der Fa. Ströhlein, Düsseldorf nach dem Einpunkt-Differenz-Verfahren nach Haul und Dümbgen

B) Beurteilung der Coloristik

Dazu wurden mit den in A) erhaltenen Pigmenten Weißverschnitte, Metalliclacke und Wasserbasislacke hergestellt und geprüft.

B1) Weißverschnitt:

4,5 g Pigment wurden in 85,5 g eines Alkyd/Melamin-Einbrennlacks (Festkörperanteil 45 Gew.-%) mit 300 g Glaskugeln (2 mm Durchmesser) 90 min mit einem Scandex-Mischer (Christina Nau GmbH, Hagen), dispergiert. Eine Mischung aus 3 g des so erhaltenen Buntlacks und 3 g eines 25 gew.-%igen Titandioxidweißlacks wurde mit einer Spiralrakel auf Aluminiumblech aufgetragen.

B2) Metalliclack:

10,5 g Pigment wurden in 89,5 g einer Kombination aus Cellulose-acetobutyrat und eines isobutylveretherten Melaminformaldehydharzes (Maprenal® MF 650, Hoechst) mit 200 g Glaskugeln (1 mm Durchmesser) 4 h mit einem Scandex-Mischer dispergiert. Eine Mischung aus 19,05 g des so erhaltenen Buntlacks und 50 g eines 4 gew.-%ig pigmentierten Aluminiumlackes wurde deckend auf ein Aluminiumblech appliziert. Nach dem Ablüften wurde mit Klarlack überschichtet und bei 130°C eingebrannt.

B3) Wasserbasislack:

10 g Pigment wurden in 100 g eines nach den Angaben der EP-A 228 003 hergestellten wäßrigen Anreibelacks nach Zugabe von 26 g Wasser mit 300 g Zirkonkugeln (1,5 mm Durchmesser) 90 min auf einem Scandex-Mischer angerieben. Anschließend wurde mit weiteren 64 g Bindemittel aufgelackt und 5 min geschüttelt.

Zur Herstellung eines Weißverschnitts wurde 5 g des so erhaltenen Buntlacks mit 5,16 g eines 37 gew.-%igen Weißlacks gemischt.

Weiterhin wurde durch Mischen von 5 g des erhaltenen Buntlacks mit 10 g eines 3 gew.-%igen Aluminiumlacks ein Metalliclack hergestellt.

Beide Lacke wurden deckend appliziert und mit Klarlack überschichtet.

Die angefertigten Ausfärbungen wurden farbmetrisch nach dem CIELAB-System vermessen. Als Meßgeräte wurden dabei das Zeiss Spektralphotometer RFC 16 und das Goniospektralphotometer Zeiss Datacolor GK 111 für winkelabhängige Messungen (Meßwinkel 25, 45 und 70°) benutzt.

Die Ergebnisse dieser Untersuchungen (Farbwinkel [°] = HGD, Chroma C*, Helligkeit L*) sind in den Tabellen 2a, 2b und 2c zusammengestellt.

Tabelle 2a

| Beurteilung der Coloristik | | |
|---|---|---|
| Bsp. | Weißverschnitt | |
| | Hue [°] | Chroma C* | Helligkeit L* |
| 3 | 74,7 | 40,3 | 74,2 |
| 4 | 75,4 | 40,7 | 74,0 |
| 8 | 74,9 | 40,0 | 73,4 |

Tabelle 2b

| Beurteilung der Coloristik | | | | | | | | |
|---|---|---|---|---|---|---|---|---|
| Metalliclack | | | | | | | | |
| Meßwinkel 25° | | | Meßwinkel 45° | | | Meßwinkel 70° | | |
| HGD | C* | L* | HGD | C* | L* | HGD | C* | L* |
| 88,4 | 34,7 | 94,7 | 89,3 | 26,0 | 62,5 | 88,9 | 21,5 | 43,3 |
| 88,9 | 36,0 | 96,0 | 89,4 | 27,1 | 63,1 | 88,5 | 22,3 | 43,8 |
| 87,3 | 36,0 | 93,0 | 88,2 | 27,2 | 63,0 | 88,4 | 22,1 | 45,5 |

Tabelle 2c

| Beurteilung der Coloristik | | | | | | | | | | | | | |
|---|---|---|---|---|---|---|---|---|---|---|---|---|---|
| Wasserbasislack | | | | | | | | | | | | | |
| Bsp. | Weißverschnitt | | | | Metalliclack | | | | | | | | |
| | (1/9 Standardfarbtiefe) | | | | Meßwinkel 25° | | | Meßwinkel 45° | | | Meßwinkel 70° | | |
| | FAE[a] | HGD | C* | L* | HGD | C* | L* | HGD | C* | L* | HGD | C* | L* |
| 9 | 98 | 75,6 | 38,3 | 72,4 | 93,9 | 24,1 | 104,9 | 94,5 | 15,9 | 59,1 | 93,1 | 13,3 | 37,3 |
| [a]FAE = Farbäquivalente, bezogen auf das Handelsprodukt Sicotrans® Gelb L 1916 als Standard (FAE 100) | | | | | | | | | | | | | |

**Patentansprüche**

1. Verfahren zur Herstellung von transparenten Eisenoxid-Gelbpigmenten durch Fällen von Eisen(II)hydroxid durch Zugabe einer anorganischen Base zu einer Eisen(II)salzlösung und anschließende Oxidation zu FeOOH, dadurch gekennzeichnet, daß man

   a) eine mindestens 0,5 molare, wäßrige Eisen(II)salzlösung bei 25 bis 45°C in Gegenwart von gelösten Phosphaten und gewünschtenfalls Zinksalzen zunächst mit so viel Base versetzt, daß 50 bis 70 % der eingesetzten Eisen(II)ionen als Hydroxid ausgefällt werden, dann so lange oxidierendes Gas durch die erhaltene Mischung leitet, bis der pH-Wert auf einen Wert < 4,5 abgesunken ist, und
   b) anschließend die Temperatur der Mischung auf 50 bis 80°C erhöht und durch weitere Zugabe von Base unter Einhaltung eines pH-Wertes von 4 bis 6 und gleichzeitiger Zuführung von oxidierendem Gas die Fällung des Eisens als FeOOH vervollständigt und das ausgefällte Pigment anschließend in üblicher Weise aus der wäßrigen Suspension isoliert.

2. Verfahren nach Anspruch 1, dadurch gekennzeichnet, daß man die Fällung in Schritt a) in Gegenwart von gelösten Phosphaten und Zinksalzen vornimmt.

3. Verfahren nach Anspruch 1 oder 2, dadurch gekennzeichnet, daß man die Fällung in Schritt a) in Gegenwart von 0,05 bis 2 Gew.-% Phosphor in Form von Phosphat, bezogen auf FeOOH, vornimmt.

4. Verfahren nach den Ansprüchen 1 bis 3, dadurch gekennzeichnet, daß man die Fällung in Schritt a) in Gegenwart von 0,1 bis 3 Gew.-% Zink, bezogen auf FeOOH, vornimmt.

5. Verfahren nach den Ansprüchen 1 bis 4, dadurch gekennzeichnet, daß man das Pigment vor Isolierung oder nach Isolierung und anschließender Redispergierung in wäßriger Phase zusätzlich mit Phosphat belegt.

6. Verfahren nach Anspruch 5, dadurch gekennzeichnet, daß man das Pigment zusätzlich mit 0,1 bis 1 Gew.-% Phosphor in Form von Phosphat belegt.

7. Transparente Eisenoxid-Gelbpigmente auf Basis von dotiertem FeOOH, das als Dotierungsmittel

   A) 0,05 bis 2 Gew.-% Phosphor in Form von Phosphat und
   B) 0,1 bis 3 Gew.-% Zink

   enthält.

8. Verwendung der Pigmente gemäß Anspruch 7 zum Färben von polymerem Material.

Claims

1. A process for preparing transparent yellow iron oxide pigments by precipitation of iron(II) hydroxide by addition of an inorganic base to an iron(II) salt solution and subsequent oxidation to FeOOH, which comprises

    a) admixing an at least 0.5 M aqueous iron(II) salt solution at from 25 to 45°C in the presence of dissolved phosphates and optionally zinc salts initially with sufficient base to precipitate from 50 to 70% of the starting iron(II) ions in the form of the hydroxide and then passing oxidizing gas through the resulting mixture until the pH has fallen to a value < 4.5, and

    b) then raising the temperature of the mixture to 50-80°C and, by further addition of base while a pH of from 4 to 6 is maintained and the simultaneous introduction of oxidizing gas, completing the precipitation of the iron in the form of FeOOH and then isolating the precipitated pigment from the aqueous suspension in a conventional manner.

2. A process as claimed in claim 1, wherein the precipitation of step a) is carried out in the presence of dissolved phosphates and zinc salts.

3. A process as claimed in claim 1 or 2, wherein the precipitation of step a) is carried out in the presence of from 0.05 to 2% by weight of phosphorus in the form of phosphate, based on FeOOH.

4. A process as claimed in any of claims 1 to 3, wherein the precipitation of step a) is carried out in the presence of from 0.1 to 3% by weight of zinc, based on FeOOH.

5. A process as claimed in any of claims 1 to 4, wherein, before it is isolated or after it has been isolated and then redispersed in an aqueous phase, the pigment is additionally coated with a phosphate.

6. A process as claimed in claim 5, wherein the pigment is additionally coated with from 0.1 to 1% by weight of phosphorus in the form of phosphate.

7. Transparent yellow iron oxide pigments based on doped FeOOH, wherein the dopant comprises

    A) from 0.05 to 2% by weight of phosphorus in the form of phosphate and
    B) from 0.1 to 3% by weight of zinc.

8. The use of the pigments of claim 7 for coloring polymeric material.


Revendications

1. Procédé de fabrication de pigments jaunes d'oxyde de fer transparents par précipitation d'hydroxydes de fer (II) par l'addition d'une base inorganique à une solution de sel de fer (II) et l'oxydation subséquente en FeOOH, caractérisé en ce que

    a) à au moins une solution aqueuse 0,5 molaire de sel de fer (II), on ajoute, à 25-45°C et en présence de phosphates et éventuellement de sels de zinc, dissous, d'abord une proportion d'une base telle que de 50 à 70% des ions fer (II) mis en oeuvre soient séparés par précipitation sous forme d'hydroxyde, puis on fait traverser le mélange obtenu par un gaz oxydant pendant le temps nécessaire à réduire la valeur du pH jusqu'à moins de 4,5, et

    b) on élève ensuite la température du mélange à 50-80°C et, par l'addition supplémentaire de base sous maintien de la valeur du pH entre 4 et 6 et addition simultanée de gaz oxydant, on parachève la précipitation du fer sous forme de FeOOH et on isole subséquemment le pigment séparé par précipitation de la suspension aqueuse de la manière habituelle.

2. Procédé suivant la revendication 1, caractérisé en ce que l'on entreprend la précipitation de l'étape a) en présence de sels de zinc et de phosphates, dissous.

3. Procédé suivant la revendication 1 ou 2, caractérisé en ce que l'on entreprend la précipitation de l'étape a) en présence de 0,05 à 2% en poids de phosphore sous forme de phosphate, par rapport à FeOOH.

**4.** Procédé suivant les revendications 1 à 3, caractérisé en ce que l'on entreprend la précipitation de l'étape a) en présence de 0,1 à 3% en poids de zinc, par rapport à FeOOH.

**5.** Procédé suivant les revendications 1 à 4, caractérisé en ce qu'avant l'isolement ou après l'isolement et la redispersion subséquente en phase aqueuse, on garnit complémentairement le pigment de phosphate.

**6.** Procédé suivant la revendication 5, caractérisé en ce que l'on garnit complémentairement le pigment de 0,1 à 1% en poids de phosphore sous forme de phosphate.

**7.** Pigments jaunes d'oxyde de fer transparents à base de FeOOH dopé, contenant, à titre d'agent dopant

    A) 0,05 à 2% en, poids de phosphore sous forme de phosphate, et
    B) 0,1 à 3% en poids de zinc.

**8.** Utilisation des pigments suivant la revendication 7 pour la teinture d'un matériau polymérique.